# EUROPEAN PATENT APPLICATION

(11) **EP 4 848 383 A1**
(43) Date of publication of application: **02.12.2026**
(21) Application number: 25179171.1
(22) Date of filing: 27.05.2025
(51) Int. Cl.: H01M 8/0226

(54) **BIPOLAR PLATE FOR A FUEL CELL**

(71) Applicant: AIRBUS Operations GmbH, 21129 Hamburg (DE)
(72) Inventor: Linde, Peter, 21129 Hamburg (DE); Hegenbart, Matthias, 21129 Hamburg (DE)
(74) Representative: Airbus Germany

(57) **Abstract**

The present disclosure relates to a bipolar plate (5) having a plurality of reinforcing fibres (200), a first group (200x) of which are laid in a first direction in a non-interlaced manner. The first group of reinforcing fibres are electrically conductive. The first direction is a direction, in which the bipolar plate extends less than in a second direction and a third direction. The present disclosure further relates a fuel cell having at least one such bipolar plate, an aircraft having such fuel cell, and a method for manufacturing such bipolar plate.

## Description

The present disclosure generally relates to a lightweight bipolar plate for a fuel cell, as well as a fuel cell, an aircraft and a method of manufacturing a bipolar plate. Particularly, the present disclosure relates to a bipolar plate having electrically conductive reinforcing fibres extending in a specific direction. Furthermore, the present disclosure relates to a fuel cell having such bipolar plate, and an aircraft having such fuel cell and a method of manufacturing such bipolar plate.

A conventional bipolar plate in a fuel cell, such as a PEM (Proton-Exchange-Membrane) fuel cell, functions as supplying or feeding a fuel (e.g., hydrogen) or oxygen (e.g., air) to the anode or cathode. Furthermore, as a plurality of fuel cells can be stacked to one another, the bipolar plate has to be electrically conductive, for example, to electrically connect a plurality of fuel cells in series increasing the total voltage of the fuel cell stack.

Hence, conventional bipolar plates are made from a metal material to have good electrical conductive properties.

The present disclosure is based on the finding that such metal materials significantly contribute to the overall weight of the fuel cell, particularly in case of a stack of several fuel cells.

It is therefore an object of the present disclosure to provide a lightweight fuel cell.

This object is solved by the present invention as defined in the independent claims. Preferred embodiments are defined by the dependent claims.

According to a first aspect to better understand the present disclosure, a bipolar plate for a fuel cell comprises a main body having a plate-like shape extending in a first direction less than in a second direction and a third direction. The bipolar plate further comprises a plurality of reinforcing fibres integrated in the main body. Thus, the main body forms a plate spanning in the second and third direction, i.e., the size of the plate in each of the second and third direction is larger than the size in the first direction. Moreover, the main body of the fuel cell is made from a composite material reinforced by fibres provided in the material of the main body.

Furthermore, the plurality of reinforcing fibres comprises a first group of reinforcing fibres extending in the first direction. This first group of reinforcing fibres are electrically conductive. In other words, a portion of the fibres, i.e., the first group of fibres, are arranged and/or oriented along the first direction. Thus, the electrically conductive fibres span in the direction, where electric current flows. In view of the plate-like shape, the electrically conductive fibres can be considered as transverse fibres running straight through the plate from one side to the other side in the direction of the shortest dimension of the plate. As a mere example, in case of a stack of the fuel cells, the first group of fibres facilitates electric current to flow from fuel cell to fuel cell.

The bipolar plate, hence, is not required to be made from a metal material, since the first group of fibres achieves the electrical conductivity. The remainder of the plate can be made from a lightweight material, such as a composite material having the fibres integrated therein. Therefore, the bipolar plate can be made electrically conductive and at the same time from a lightweight material.

In an implementation variant, the first group of reinforcing fibres can be carbon reinforcing fibres. Carbon fibres are good electrical conductors and were used in composite materials for a long time. Thus, the carbon fibres do not cause material incompatibility with the remainder material of the bipolar plate. They have a good reinforcing capability and can transport electrons efficiently. Furthermore, carbon fibres arranged in the first direction allow high (pre-) stressing forces to be applied on the bipolar plate. Particularly, the fuel cell is usually hold by brackets or the like, which press the layers of the fuel cell together (in the first direction). The carbon fibres arranged/oriented in the first direction allow high pressing forces to be applied.

In an implementation variant, the fibres of the first group of reinforcing fibres can have a substantially straight geometry in the first direction. In other words, the fibres of the first group can have a length substantially equal to or only slightly larger than the size of the bipolar plate in the first direction. The fibres of the first group are laid out in the main body with as a less curves or bents as possible.

In an implementation variant, the plurality of reinforcing fibres can comprise a second group of reinforcing fibres extending in the second direction and a third group of reinforcing fibres extending in the third direction. Thus, the entire plurality of reinforcing fibres forms a three-dimensional fibre structure, e.g., a fabric, textile, mesh or the like. The bipolar plate, hence, has a good strength in all three dimensions. In addition, due to the fibres being arranged in all three dimensions, heat transport from the centre of the plate to a perimeter of the plate is improved.

In an implementation variant, the second group of reinforcing fibres and/or the third group of reinforcing fibres can be made from one or more of glass, carbon, a plastic material, a metal wire, or the like. As a mere example, the first, second and third group of reinforcing fibres can be made from carbon. According to a further example, the first group of reinforcing fibres can be made from carbon, while the second and third group of reinforcing fibres can be made from a non-carbon material.

In an implementation variant, the main body can be made from a matrix covering the plurality of reinforcing fibres. For instance, the main body can be made from a resin covering the plurality of reinforcing fibres. As a mere example, the matrix can be a plastic composite material, so that the bipolar plate is a carbon fibre reinforced plastic (CFRP) bipolar plate. As a mere example, the matrix material can be a polymer matrix or the like.

In an implementation variant, at least a portion of a surface of the main body facing in the first direction can be machined or grinded, so that at least some of the first group of reinforcing fibres are exposed at the surface. Thus, the carbon fibres arranged/oriented in the first direction directly face the electrodes (anode or cathode) that are usually the next adjacent layer in the fuel cell. A good electrical conductivity throughout the fuel cell can be achieved by the exposed electrically conductive fibres.

Instead of machining or grinding, sanding or another abrasive operation can be performed on the surface.

Furthermore, the reinforcing fibres of the first group can be arranged to stick out of the surface (or both surfaces) of the main body facing in the first direction. Thus, a good electrical conductivity can likewise be achieved.

In an implementation variant, the main body can have a plurality of channels or grooves. Such channels or grooves can be configured to guide/conduct a fuel (e.g., hydrogen, methane, etc.) or an oxidiser (e.g., air, oxygen or the like).

In an implementation variant, the main body can have a plurality of channels or grooves at one or both surfaces facing in the first direction. The channels or grooves can be indents on the surface or surfaces of the bipolar plate facing in the first direction. This is regularly the surface(s), on which an electrode (anode or cathode) is in contact with the bipolar plate.

In an implementation variant, the plurality of reinforcing fibres can be a nonwoven three-dimensional fabric form. Such nonwoven three-dimensional fabric form is to be understood as a corpus extending in three dimensions and made from the plurality of fibres.

In an implementation variant, the plurality of reinforcing fibres can be laid out in a non-interlacing, orientating orthogonally and binding process (NOOB process). This NOOB process (also referred to as Noobing) is a layer less three-dimensional fibre reinforcement with no crimp in any direction. The fibres are held together by binding in at least two directions. For instance, the fibres are held in place by the binding, i.e., by providing the fibres in orthogonal directions. This Noobing process allows orienting the plurality of fibres in all three dimensions, and particularly, along the first direction, in a very straight manner. Thus, the above-described effect of the straight electrically conductive fibres in the first direction can be easily achieved during production of the bipolar plate.

According to a second aspect to better understand the present disclosure, a fuel cell comprises an anode, a membrane, a cathode, and at least one bipolar plate of the first aspect or one or more of its variants.

As a mere example, two bipolar plates can be provided on the respective sides of the fuel cell in the first direction, i.e., one bipolar plate on the anode and one bipolar plate on the cathode.

According to a third aspect to better understand the present disclosure, an aircraft has at least one fuel cell of the second aspect.

As a mere example, the fuel cell can be employed in the aircraft to generate electric power, for instance, to propel the aircraft, to provide electric power to internal components, such as aviation components, and the like.

According to a fourth aspect to better understand the present disclosure, a method for manufacturing a bipolar plate comprises the steps of laying a plurality of reinforcing fibres in a non-interlaced manner, placing the laid plurality of reinforcing fibres in a plate-like shape extending in a first direction less than in a second direction and a third direction, applying a matrix to the plurality of reinforcing fibres, and curing the matrix to form a main body of the bipolar plate. Thus, a bipolar plate can be made from a composite fibre reinforced plastic (CFRP), which is a lightweight material.

The method step of laying the plurality of reinforcing fibres comprises laying a first group of the reinforcing fibres in the first direction. In addition, the first group of reinforcing fibres are electrically conductive. Thus, the lightweight bipolar plate is also provided with electrical conductors through the material of the main body in the direction, where electric current flows. The electrically conductive reinforcing fibres arranged in the first direction provide for a good transport of electrons and good electric conductivity with respect to the anode and/or cathode, which is regularly attached to a surface of the bipolar plate facing in the first direction.

The laying of the first group of reinforcing fibres in the first direction can include laying the reinforcing fibres of the first group in a straight manner along the first direction, i.e., as crimp free as possible.

In an implementation variant, laying the plurality of reinforcing fibres comprises laying the plurality of reinforcing fibres in a non-interlacing, orientating orthogonally and binding (NOOB) process. This NOOB process (also referred to as noobing) results in a layer less three-dimensional fibre reinforcement with no crimp in any direction. The process achieves a three-dimensional fabric form designed to bind a set of linear yarns that is arrayed in either uniaxial or multi-axial orientation.

The fibres are held together by binding in at least two directions. For instance, the fibres are held in place by the binding, i.e., by providing the fibres in orthogonal directions.

In the present disclosure, the plurality of fibres are to be understood as any form of fibres of the disclosed material(s), which includes a yarn (regularly made from fibres) as well as otherwise oriented fibres or strands/threats/strings of fibres, etc..

In an implementation variant, the method can further comprise machining or grinding at least a portion of a surface of the main body facing in the first direction, so that at least some of the first group of reinforcing fibres are exposed at the surface. This machining or grinding can include any abrasive treatment of the surface. For instance, the matrix material may be removed from the surface, until at least some of the reinforcing fibres are exposed, particularly the fibres of the first group.

In an implementation variant, the method can further comprise forming a plurality of channels or grooves on at least one surface of the main body facing in the first direction. As a mere example, the forming of the channels or grooves can be implemented by having a mould forming indents, on which the matrix forming the main body of the bipolar plate is applied and cured.

Alternatively or additionally, the channels or grooves can be formed by machining.

In any case, the channels or grooves can have a straight form or can form a pattern of any kind.

Preferably, the channels or grooves have ends at surfaces of the bipolar plate facing in the second direction and/or third direction. This allows the fuel or oxidiser to stream through the bipolar plate in the second direction or third direction.

As a mere example, the channels or grooves can be provided on both sides facing in the first direction. The channels or grooves on one side can be employed to guide fuel therethrough, while the channels or grooves on the other side can be employed to guide oxidiser therethrough.

Furthermore, the channels or grooves on one side of the bipolar plate can extend in the second direction, while the channels or grooves on the opposite side of the bipolar plate can extend in the third direction.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates an exemplary fuel cell;
- Figure 2: schematically illustrates an exemplary bipolar plate and a detail thereof;
- Figure 3: schematically illustrates a detail of a plurality of reinforcing fibres laid out in the bipolar plate;
- Figure 4: schematically illustrates a side view of a laying principle of reinforcing fibres;
- Figure 5: schematically illustrates a perspective view of laying principle of reinforcing fibres;
- Figure 6: schematically illustrates an aircraft comprising a fuel cell; and
- Figure 7: schematically illustrates a flow diagram of a method for manufacturing a fuel cell.

In the following description, for purposes of explanation and not limitation, specific details are set forth in order to provide a thorough understanding of the present disclosure. It will be apparent to one skilled in the art that the present disclosure may be practiced in other implementations that depart from these specific details.

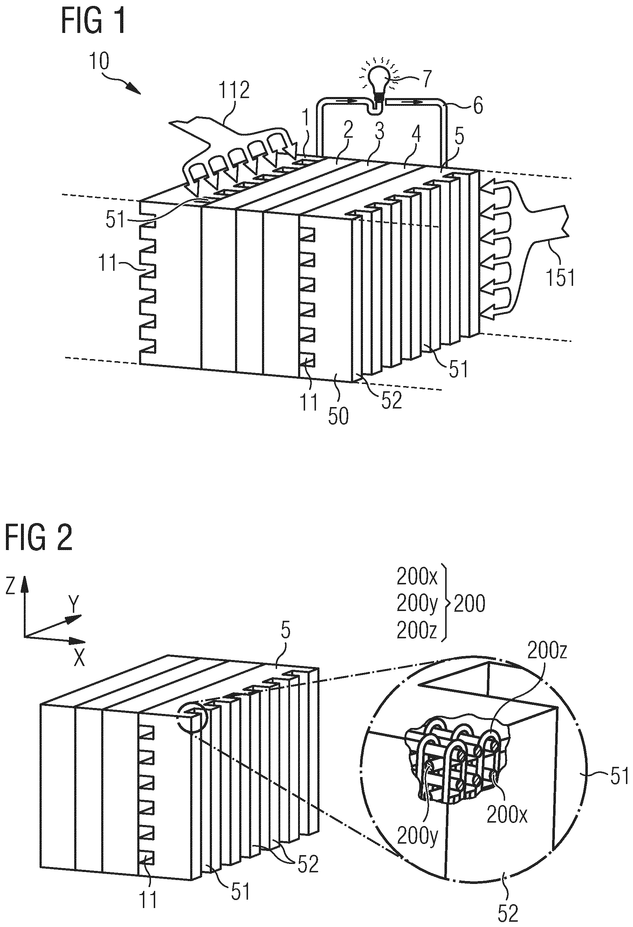

Figure 1 schematically illustrates an exemplary fuel cell 10. The fuel cell 10 comprises an anode 2, a membrane 3 and the cathode 4 (from left to right in Figure 1). The membrane can be a proton-exchange-membrane (PEM) or can be an anion-exchange-membrane (AEM).

On each side of this portion of the fuel cell 10, i.e., on the anode 2 and the cathode 4, is a respective bipolar plate 1 and 5. Each bipolar plate 1, 5 has a plate-like shape extending in a first direction less than in a section direction and a third direction. Particularly, each bipolar plate 1, 5 comprises a main body 50 having the plate-like shape extending in the first direction less than in the second direction and the third direction. For instance, the first direction can be a left-right direction in Figure 1 (or X-axis direction in Figure 2), the second direction can be a front-to-rear direction in Figure 1 (or Y-axis direction in Figure 2), and the third direction can be an up and down direction in Figure 1 (or Z-axis direction in Figure 2).

There are channels or grooves 11 illustrated on one side of the bipolar plate 1, 5 extending in the second direction. This can be a first gas diffusion channel, for example, for guiding and conducting an oxidiser (e.g., oxygen). Figure 1 exemplarily illustrates a stream 151 of air/oxygen entering the channels or grooves 11.

Likewise, there are channels or grooves 51 illustrated on the opposite side of the bipolar plate 1, 5 extending in the third direction. This can be a second gas diffusion channel, for example, for guiding and conducting a fuel (e.g., hydrogen). Figure 1 exemplarily illustrates a stream 112 of fuel/hydrogen entering the channels or grooves 51.

An electrical circuit 6 can be formed between the anode 2 and the cathode 4, so that an electrical load 7 can be operated. It is to be understood that on either side of the illustrated fuel cell 10 there can be another stack having an anode 2, a membrane 3, a cathode 4, and a further bipolar plate 1, 5. Such stack of fuel cells 10 is then electrically connected in series, so that the electric circuit 6 can be operated with a higher voltage and, hence, higher power. Thus, the channels or grooves 11 on the bipolar plate 1 and the channels or grooves 51 on the bipolar plate 5 can be provided for the next adjacent fuel cell 10.

Figure 2 schematically illustrates an exemplary bipolar plate 5 and a detail thereof. Particularly, the enlarged detail shows the upper corner of a surface of the main body 50 facing in the first direction, and adjacent to a channel or groove 51. Due to the plurality of channels or grooves 51, the surface of the main body 50 of the bipolar plate can also be considered as having a plurality of protrusions 52, one of which is enlarged in Figure 2.

A plurality of reinforcing fibres 200 are integrated in the main body 50. The plurality of reinforcing fibres 200 comprises a first group of reinforcing fibres 200x extending in the first direction, and can further comprise a second group of reinforcing fibres 200y extending in the second direction and/or a third group of reinforcing fibres 200z extending in the third direction.

The fibres of the first group of reinforcing fibres 200x are electrically conductive. Since the fibres 200x of the first group are arranged/oriented in the first direction, they span between the opposite surfaces each facing in the first direction, i.e., the surfaces of the bipolar plate 5, which are in contact with an anode 2 or a cathode 4. Since the first group of reinforcing fibres 200x is electrically conductive, electricity generated by the fuel cell can be easily transported (electrons can be transported) in the first direction, in which the electricity flows.

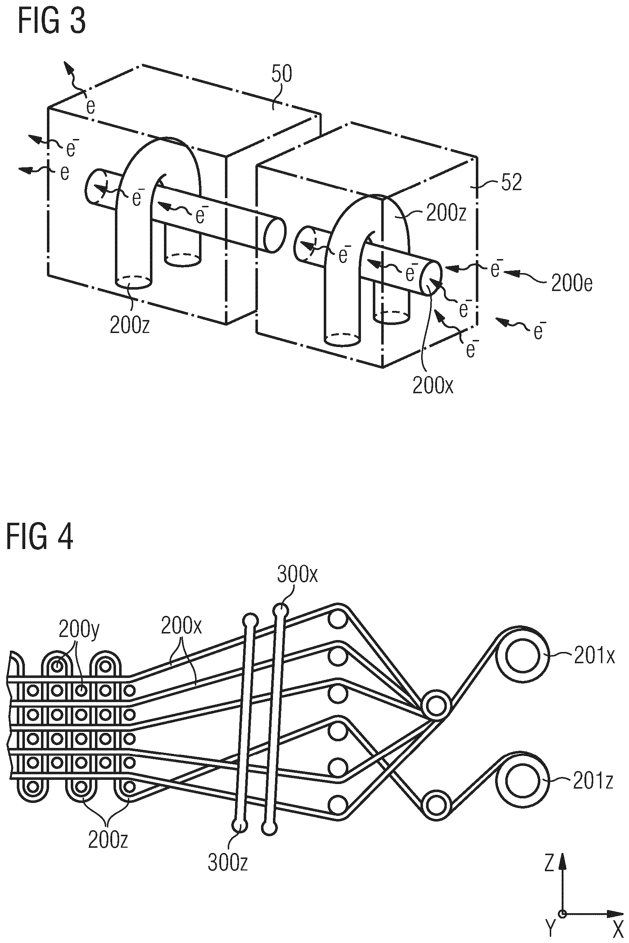

Figure 3 schematically illustrates a detail of the plurality of reinforcing fibres 200 laid out in the bipolar plate 1, 5. Specifically, the detail illustrates one fibre 200x of the first group and two fibres 200z of the third group. The fibre 200x extending in the first direction has a straight layout, so that this electrical conductor is arranged on the shortest path or at least a very short path between the two surfaces facing in the first direction. Thus, the bipolar plate 1, 5 provides for a short path for electrons e⁻ through the plate 1, 5.

In addition, the fibre 200x provides reinforcement in the first direction, for example, with respect to any forces acting on the respective surfaces and in the first direction.

The additional fibres 200y and/or 200z provide reinforcing capabilities in the other dimensions. Thus, a lightweight but also strong and resistant bipolar plate 10 can be formed. For instance, the main body 50 may include or can be made from a matrix, such as a resin, covering the plurality of reinforcing fibres 200.

Figure 4 schematically illustrates a side view of a laying principle of reinforcing fibres 200. The plurality of fibres 200 can be laid out to achieve a non-woven three-dimensional fabric form. In this example, the reinforcing fibres 200 are provided in the form of yarn that is provided on a material spool 201x for yarn 200x in the first direction and a material spool 201z for yarn 200z in the third direction.

Two steering frames 300x and 300z are provided to layout the yarn 200x and 200z, respectively.

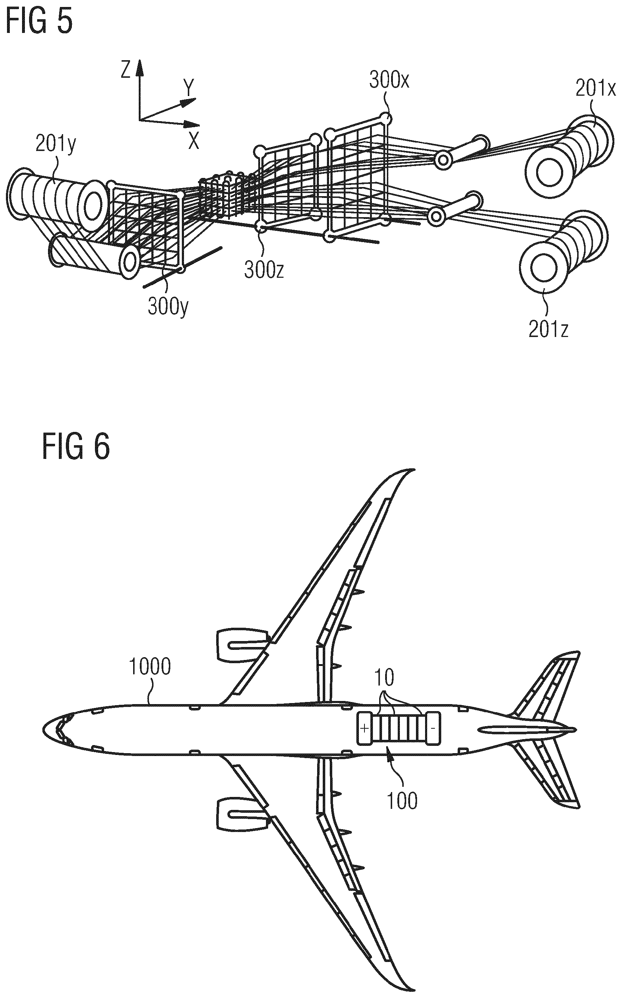

Figure 5 schematically illustrates a perspective view of laying principle of the reinforcing fibres 200. Besides the components already explained with respect to Figure 4, there is further provided a material spool 201y for yarn 200y in the second direction, and a steering frame 300y for the yarn 200y in the second direction.

As a mere example, laying the plurality of reinforcing fibres 200 can comprise laying the plurality of reinforcing fibres 200 in a non-interlacing, orientating orthogonally and binding process, i.e., also referred to as a NOOB process or Noobing. The resulting form of reinforcing fibres or yarns 200 provides a high stability for the bipolar plate 10, once a matrix has been applied to the reinforcing fibres 200 and the matrix has been cured, thus, forming a fibre reinforced plastic (FRP) plate.

Figure 6 schematically illustrates an aircraft 1000 comprising a fuel cell stack 100.

The fuel cell stack 100 can be a single fuel cell 10 as illustrated in Figure 1 or can be a stack of fuel cells 10 made from a plurality of fuel cells 10 as the one illustrated in Figure 1. Due to the good electrical conductivity in the first direction, in Figure 6 from the + pole to the - pole, electricity/electrons can easily flow in the first direction between the poles through each of the bipolar plates 1, 5 in the entire fuel cell stack 100.

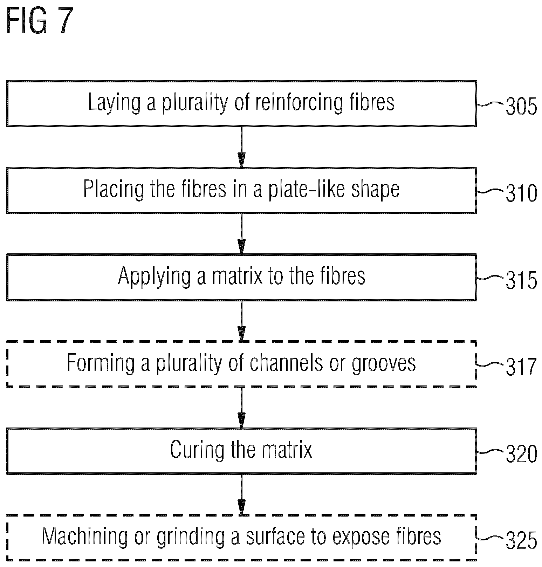

Figure 7 schematically illustrates a flow diagram of a method for manufacturing a fuel cell 10. The method can begin with laying, in step 305, a plurality of reinforcing fibres in a non-interlaced manner. As a mere example, this laying can comprise a non-interlacing, orientating orthogonally and binding process (NOOB process).

The plurality of fibres can be placed, in step 310 in a plate-like shape extending in a first direction less than in a second direction and a third direction. In other words, the three-dimensional fibre form is placed in a manner to have a flat shape.

A first group 200x of the reinforcing fibres 200 are laid in the first direction. The fibres 200x of the first group are electrically conductive.

In a next step 315, a matrix is applied to the plurality of reinforcing fibres 200. This matrix can be a resin or other polymeric material, such as a plastic.

In an optional step 317, a plurality of channels or grooves 11, 51 can be formed on at least one surface of the bipolar plate 10 to be produced. This at least one surface faces in the first direction. As a mere example, a mould (not illustrated), on which the three-dimensional form of reinforcing fibres is placed and the matrix is applied, may have protrusions, that form the channels or grooves 11, 51 in the matrix.

Thereafter, in step 320, the matrix is cured to form a main body 50 of the bipolar plate 1, 5. In case the channels or grooves 11, 51 are not formed with a mould or the like, the channels or grooves 11, 51 can be machined into the cured matrix of the main body 50. This forming of channels or grooves 11, 51, however, is also optional.

In a further optional step 325, at least a portion of one or both surfaces facing in the first direction can be machined or grinded, so that at least some of the first group 200x of reinforcing fibres 200 are exposed at the surface. Thus, electrical conductivity of the bipolar plate 1, 5 can be increased at the surfaces facing in the first direction.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A bipolar plate (1, 5) for a fuel cell (10), the bipolar plate comprising:
a main body (50) having a plate-like shape extending in a first direction less than in a second direction and a third direction; and
a plurality of reinforcing fibres (200) integrated in the main body (50),
**characterised in that**
the plurality of reinforcing fibres (200) comprises a first group of reinforcing fibres (200x) extending in the first direction, and
the first group of reinforcing fibres (200x) are electrically conductive.

2. The bipolar plate (1, 5) of claim 1, wherein the first group of reinforcing fibres (200x) are carbon reinforcing fibres, and/or
wherein the fibres of the first group of reinforcing fibres (200x) have a substantially straight geometry in the first direction.

3. The bipolar plate (1, 5) of claim 1 or 2, wherein the plurality of reinforcing fibres (200) comprises a second group of reinforcing fibres (200y) extending in the second direction and a third group of reinforcing fibres (200z) extending in the third direction.

4. The bipolar plate (1, 5) of one of claims 1 to 3, wherein the main body is made from a matrix, preferably a resin, covering the plurality of reinforcing fibres.

5. The bipolar plate (1, 5) of one of claims 1 to 4, wherein at least a portion of a surface of the main body (50) facing in the first direction is machined or grinded, so that at least some of the first group of reinforcing fibres (200x) are exposed at the surface.

6. The bipolar plate (1, 5) of one of claims 1 to 5, wherein the main body (50) has a plurality of channels or grooves (11, 51), preferably at one or both surfaces facing in the first direction.

7. The bipolar plate (1, 5) of one of claims 1 to 6, wherein the plurality of reinforcing fibres (200) are a nonwoven three-dimensional fabric form,
wherein, preferably, the plurality of reinforcing fibres (200) are laid out in a non-interlacing, orientating orthogonally and binding process.

8. A fuel cell (10), comprising:
an anode (2);
a membrane (3);
a cathode (4); and
at least one bipolar plate (1, 5) of one of claims 1 to 7.

9. An aircraft (1000) having at least one fuel cell (10) of claim 8.

10. A method for manufacturing a bipolar plate (1, 5), the method comprising:
laying (305) a plurality of reinforcing fibres (200) in a non-interlaced manner;
placing (310) the laid plurality of reinforcing fibres (200) in a plate-like shape extending in a first direction less than in a second direction and a third direction;
applying (315) a matrix to the plurality of reinforcing fibres (200); and
curing (320) the matrix to form a main body (50) of the bipolar plate (1, 5),
**characterised in that**
laying (305) the plurality of reinforcing fibres (200) comprises laying a first group (200x) of the reinforcing fibres in the first direction, and
the first group of reinforcing fibres (200x) are electrically conductive.

11. The method of claim 10, wherein laying (305) the plurality of reinforcing fibres (200) comprises laying the plurality of reinforcing fibres (200) in a non-interlacing, orientating orthogonally and binding process.

12. The method of claim 10 or 11, further comprising:
machining or grinding (325) at least a portion of a surface of the main body (50) facing in the first direction, so that at least some of the first group of reinforcing fibres (200x) are exposed at the surface.

13. The method of one of claims 10 to 12, further comprising:
forming (317) a plurality of channels or grooves (11, 51) on at least one surface of the main body (50) facing in the first direction.
